# EUROPÄISCHE PATENTSCHRIFT

(11) **EP 1 621 846 B1**
(45) Veröffentlichungstag und Bekanntmachung des Hinweises auf die Patenterteilung: **26.12.2012**
(21) Anmeldenummer: 04017467.4
(22) Anmeldetag: 23.07.2004
(51) Int. Cl.: F16B 11/00, G01D 11/30, F16B 5/02

(54) **Vormontage eines Sensors**
Pre-assembly of a sensor
Pré-assemblage d'un capteur

(43) Veröffentlichungstag der Anmeldung: 01.02.2006
(73) Patentinhaber: Dr. Johannes Heidenhain GmbH, 83301 Traunreut (DE)
(72) Erfinder: Böge, Ludwig, 07751 Jena OT Jenapriessnitz/Wogau (DE); Franz, Heinz-Günther, 22359 Hamburg (DE); Freitag, Hans-Joachim, Dr., 07749 Jena (DE); Schmidt, Andreas, 99089 Erfurt (DE)

(56) Entgegenhaltungen:
- DE-A- 19 700 367
- US-A- 1 097 185
- US-A- 4 667 922
- US-A- 4 687 165
- US-A- 4 805 888

## Beschreibung

Die Erfindung bezieht sich auf Montagesystem zum Einjustieren und Befestigen eines ersten Bauteils an einem zweiten Bauteil. Weiter bezieht sich die Erfindung auf Verfahren zur Montage eines ersten Bauteils an einer Anbaufläche eines zweiten Bauteils.

Häufig müssen Bauteile an Anbauflächen in vorbestimmten Lagen befestigt werden. Die vorbestimmte Lage wird dabei üblicherweise in einem Justierschritt eingerichtet, und anschließend wird das Bauteil an der Anbaufläche endmontiert. Dabei sollte natürlich die einjustierte Lage möglichst unverändert erhalten bleiben. Ein Beispiel für diese Problematik findet sich beispielsweise bei Längen- oder Winkelmeßsystemen, bei denen ein optisch abzutastendes Geberelement an einem Maschinenteil in exakt einzujustierender Lage befestigt werden muß, wie dies unter anderem in der US 5.979.238 erwähnt ist. Eine Vorrichtung zum Justieren eines Gerätes an einer ebenen Anbaufläche ist aus der US 4.667.922 bekannt.

Die in der Einleitung der Druckschrift US 5.979.238 genannte Endmontage durch Verklebung erfordert zwingend, daß die justierte Lage vor dem Einleiten der Verklebung eingerichtet wird, da nach Ausführung der Klebung Korrekturen nicht mehr möglich sind.

Es hat sich deshalb für solche Anwendungen, insbesondere, wenn die Endbefestigung durch eine Verklebung erfolgt, als günstig herausgestellt, das Bauteil an der Anbaufläche zuerst mit geeigneten Mitteln vorzubefestigen und erst, wenn Justierung erreicht ist, dann die Endmontage auszuführen. Im vormontierten Zustand wird dabei für die gewünschte justierte Lage des Bauteils gesorgt, so daß anschließend die Endmontage, d. h. die abschließende Anbringung des Bauteils an der Anbaufläche, ausgeführt werden kann.

Der Erfindung liegt die Aufgabe zugrunde, dem Fachmann Mittel zur Vormontage des Bauelementes, das in einer justierten Lage an der Anbaufläche zu montieren ist, an die Hand zu geben, die eine einfache Vormontage und insbesondere eine einfache Justierung ermöglichen.

Diese Aufgabe wird erfindungsgemäß durch ein System mit den Merkmalen des Anspruchs 1 gelöst. Eine Vormontagevorrichtung für ein Bauteil, das in einer justierten Lage an einer Anbaufläche zu montieren ist, weist mindestens zwei Köpfe auf, die jeweils an der Anbaufläche drehbar befestigbar sind, jeweils exzentrisch ausgebildet sind und an denen das Bauteil aufhängbar ist, so daß die Lage des aufgehängten Bauteils durch Drehung der Köpfe einjustierbar ist. Zu diesem Vormontageelement gehört ein passend eingerichtetes Bauteil, das mit dem Vormontageelement zusammenwirkt. Erfindungsgemäß ist deshalb weiter ein Bauteil zur Vormontage mit dem genannten Vormontageelement vorgesehen, das mindestens eine Ausnehmung, mit der das Bauteil an den Köpfen des Vorbefestigungselementes aufhängbar ist, und Endbefestigungsmittel aufweist, die das Bauteil in der justierten Lage an der Anbaufläche befestigen. Weiter ist vorgesehen ein Vormontagesystem zur Vormontage eines Bauteils an einer Anbaufläche, wobei an der Anbaufläche mindestens zwei, jeweils als Exzenter ausgebildete Köpfe vorgesehen sind, das Bauteil mindestens eine Ausnehmung aufweist und an die Anbaufläche aufhängbar ist, indem die Köpfe in die Ausnehmung/Ausnehmungen eingreifen.

Die Aufgabe wird schließlich weiter gelöst durch ein Verfahren zur Montage eines Bauteils an einer Anbaufläche gemäß Anspruch 11. Vorbereitend werden an der Anbaufläche mindestens zwei Köpfe drehbar befestigt werden, die jeweils als Exzenter ausgebildet sind, zur Justierung die Köpfe durch Drehen einjustiert werden, so daß die Ober- oder Unterkanten der Exzenter eine bestimmte Lage haben, zur Vormontage das mit mindestens einer zu den Köpfen passenden versehene Bauteil mittels der Köpfe an der Anbaufläche eingehängt wird und abschließend das Bauteil an der Anbaufläche endmontiert wird.

Erfindungsgemäß ist also eine Vormontagevorrichtung mit exzentrisch wirkenden Elementen vorgesehen. Durch Verschwenken der Exzenter erfolgt eine Feinjustierung, so daß das erfindungsgemäß ebenfalls vorgesehene, an den exzentrischen Köpfen aufhängbare Bauteil hinsichtlich seiner Lage justiert werden kann.

Die durch die Exzenter gegebene Feineinstellung erlaubt eine Präzision der Lagejustierung, die die Genauigkeit, mit der die Köpfe an der Anbaufläche angebracht werden können, deutlich überschreitet.

Das erfindungsgemäße System sieht eine Vormontage dadurch vor, daß einerseits die exzentrisch ausgebildeten Köpfe an dem einen Bauteil angebracht werden, und daß andererseits das Bauteil in der Vormontagestellung mittels der Köpfe an der Anbaufläche hängt. Befinden sich die Köpfe an dem Bauteil, an dem das andere Bauteil angehängt wird, ist für die Justierlage naturgemäß die Oberkante des exzentrisch ausgebildeten Köpfe ausschlaggebend. Folglicherweise wird bei der Einjustierung durch Verschwenken der Exzenter dann auch die Oberkante erfaßt. Sind die Köpfe dagegen an dem Bauteil vorgesehen, das an dem anderen Bauteil angehängt wird, liegen die Köpfe an der Unterkante auf, so daß die Einjustierung auch darauf bezogen werden muß.

Prinzipiell kann das Einhängen des Bauteils mittels der Köpfe auf nahezu beliebige Art und Weise erfolgen. Zweckmäßigerweise wird man zusätzlich eine Sicherung vorsehen, die ein Abfallen des Bauteils nach dem Aufhängen verhindert. Eine mögliche Maßnahme dazu stellt eine Abstufung an den Köpfen dar, an denen eine entsprechende Hinterschneidung der Ausnehmung einhakt.

In einer besonders vorteilhaften Weiterbildung kann eine solche Abfallsicherung so ausgebildet werden, daß sie für verschiedene Abstände zwischen Bauteil und Anbaufläche wirkt. Die Exzenter können dann für verschieden dimensionierte Bauteile verwendet werden. Eine besonders einfache Maßnahme, dies zu bewerkstelligen, stellt ein sich zur Anbaufläche hin verjüngender Kegelstumpfabschnitt an den Köpfen dar.

Ein solcher Kegelstumpfabschnitt kann zusätzlich auch dazu eingesetzt werden, das Bauteil auf die Anbaufläche hinzuziehen, wenn die Ausnehmung des Bauteils eine Hinterschneidung aufweist, die bei angehängtem Bauteil am Kegelstumpfabschnitt anliegt. Die Hinterschneidung hakt sich dann am Kegelstumpfabschnitt ein und das Bauteil wird durch die Schwerkraft an die Anbaufläche hingezogen, wenn die Ausnehmung geeignet Platz für die Köpfe bietet. Eine besonders stabile Lage in der Vormontagestellung erreicht man dabei, wenn die Hinterschneidung als zur Kegelstumpffläche passende Schrägfläche ausgebildet ist.

Die exzentrische Ausbildung der Köpfe dient, wie bereits erwähnt, zur Feineinstellung in oder vor der Vormontage. Weisen die Köpfe weiter die eingangs erwähnte Hinterschneidung auf, legen die in Draufsicht gesehenen äußersten Umrißlinien der Köpfe die Lage des aufgehängten Bauteiles fest. Um hierbei etwaige durch Spiel bedingte Dejustierungen zu reduzieren oder auszuschließen, ist es zweckmäßig, dem Kegelstumpfabschnitt in Richtung auf die Anbaufläche einen zylindrischen Abschnitt vorzulagern. Der genannte äußerste Umriß der Köpfe ist dann durch eine zylindrische Umrißfläche gebildet, der eine klare definierte Auflagefläche erreicht. Dies gilt insbesondere dann, wenn die Ausnehmung eine entsprechende Gegenfläche aufweist, die bei angehängtem Bauteil am zylindrischen Abschnitt anliegt.

Besonders vorteilhaft ist es, wenn die Köpfe sowie die Ausnehmung so gestaltet sind, daß bei der Endmontage, d. h. der unverrückbaren Befestigung des Bauteils an der Anbaufläche, eine allfällige Verschiebung des Bauteils dadurch erfolgt, daß die Gegenfläche auf dem zylindrischen Abschnitt gleitet. Dadurch kann erreicht werden, daß eine solche Verschiebung lediglich als Bewegung in einer Richtung verläuft. Diese Richtung kann man vorteilhafterweise so wählen, daß sie für die Justierung des Bauteils ohne Belang oder zumindest unkritisch ist. Auch ist es möglich, diese nun exakt definierte Verschiebung als Vorhalt bei der Justierung zu berücksichtigen, um eine exakt definierte gewünschte justierte Stellung des endmontierten Bauteils zu erreichen.

Zum Aufhängen des Bauteils benötigt man mindestens zwei Köpfe. Je nach Länge des Bauteils kann man aber auch eine größere Anzahl von Köpfen verwenden, was den Vorteil hat, daß die Anforderungen hinsichtlich Biegesteifheit des Bauteils reduziert sind. Insbesondere bietet es sich an, eine Vielzahl von Köpfen derart zu beabstanden, daß der Abstand zwischen den Köpfen eine Durchbiegung des angehängten Bauteils über ein bestimmtes zulässiges Maß hinaus verhindert.

Die Justierung der Köpfe durch exzentrische Verschwenkung kann sowohl vor, als auch nach dem Anhängen des Bauteils bewerkstelligt werden. Justiert man die Köpfe vor dem Anhängen des Bauteils, wird man zweckmäßigerweise die für die Justierung ausschlaggebende Kante (Ober- oder Unterkante) der Köpfe mit geeigneten Meßmitteln gegenüber einer Referenz einstellen, bei der es sich beispielshalber um ein Element des die Anbaufläche aufweisenden Teils handeln kann.

Für die Variante, bei der die Köpfe erst nach dem Anhängen des Bauteils justiert werden, wird man dagegen die Lage des Bauteils selbst gegenüber einer geeigneten Referenz erfassen. Für diese Bauweise sind weiter geeignete Mittel erforderlich, die eine Drehung der Köpfe bei angehängtem Bauteil erlauben. Eine zweckmäßige Realisierung dieser Mittel kann beispielsweise ein Durchbruch sein, durch den hindurch alle Köpfe drehbar antreibbar sind.

Zur Endmontage wird eine Verklebung verwendet, mit einer Klebeschicht, die entweder auf dem Bauteil oder auf der Anbaufläche vorgesehen werden kann. Die Endmontage, in der der Spalt durch Andrücken des Bauteils auf die Anbaufläche geschlossen wird, stellt dann das Einleiten der Verklebung dar. Verwendet man eine druckaktivierbare Klebeschicht, ist zugleich auch die Aktivierung des Klebstoffes bewirkt.

Die Erfindung wird nachfolgend unter Bezugnahme auf die Zeichnungen beispielhalber noch näher erläutert. In den Zeichnungen zeigen:
- Fig. 1: eine schematische Schnittdarstellung eines Sensorelementes, das an einem Bauteil justiert und befestigt wird,
- Fig. 2: das Sensorelement der Fig. 1 während des Justagevorganges,
- Fig. 3: das Sensorelement der Fig. 2 nach abgeschlossenem Justiervorgang und bei der Endmontage,
- Fig. 4: eine Ausschnittsdarstellung eines Sensorelementes ähnlich dem der Fig. 3 im endmontierten Zustand,
- Fig. 5: eine Schnittdarstellung eines anderen Sensorelementes im Zustand des Elementes der Fig. 2,
- Fig. 6: das Sensorelement der Fig. 5 im Zustand des Elementes der Fig. 3,
- Fig.7: eine Draufsicht auf ein Ausführungsbeispiel für das in den Fig. 1 bis 6 in Schnittdarstellung gezeigte Sensorelement,
- Fig. 8 und 9: jeweils Draufsichten analog Fig. 7 von weiteren Ausführungsbeispielen,
- Fig. 10: ein Sensorelement ähnlich dem der Fig. 8 in einer Darstellung ähnlich der Fig. 2, d.h. während der Justage und vor der Endmontage,
- Fig. 11: das Sensorelement der Fig. 10 im endmontierten Zustand,
- Fig. 12: eine Schnittdarstellung einer Vorbefestigungseinrichtung zum Herstellen einer Justierlage während des Justiervorganges,
- Fig. 13: eine Draufsicht auf die Vorbefestigungseinrichtung der Fig. 12,
- Fig. 14: eine Schnittdarstellung eines Sensorelementes ähnlich der Fig. 4, allerdings mit der Vorbefestigungseinrichtung der Fig. 13 und 14 während des Justiervorgangs,
- Fig. 15: eine Darstellung ähnlich der Fig. 14 mit justierter Vorbefestigungseinrichtung bei der Vormontage,
- Fig. 16: die Baugruppe der Fig. 15 nach der Endmontage,
- Fig. 17: eine Darstellung ähnlich der Fig. 14, wobei das Sensorelement eine Justierung im vormontierten Zustand ermöglicht,
- Fig. 18: eine Darstellung ähnlich der Fig. 15, wobei allerdings eine Justierung erfolgt, und
- Fig. 19: eine Darstellung ähnlich der Fig. 16.

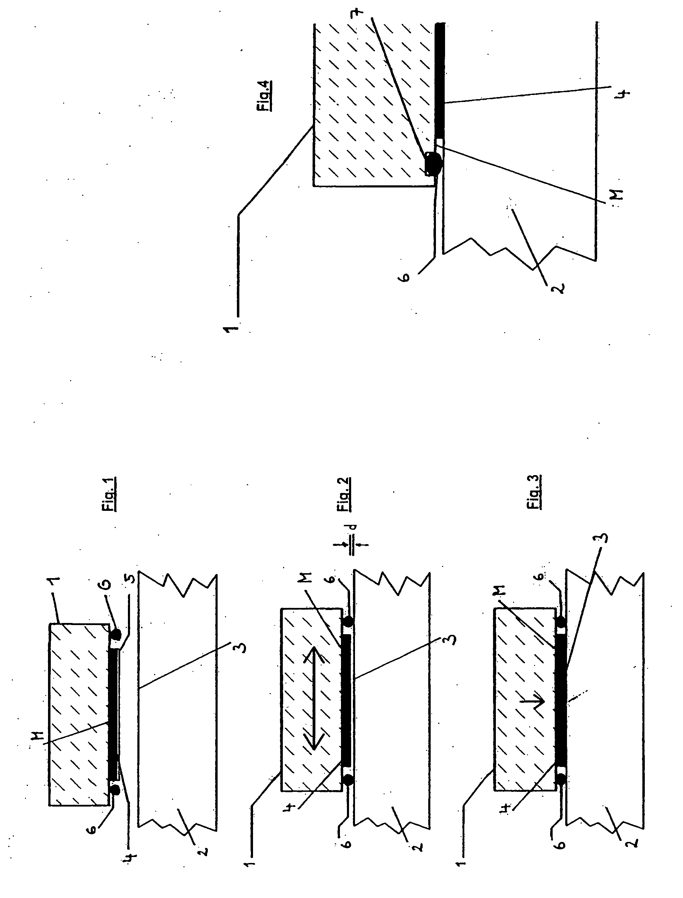

In Fig. 1 ist eine schematische Schnittdarstellung durch ein Sensorelement 1 gezeigt, in einer Phase des Montageverfahrens bevor das Sensorelement 1 an einem Teil 2 befestigt wird. In der gezeigten Ausführungsform ist das Sensorelement 1 Teil eines (nicht weiter dargestellten) Meßsystems, das z. B. die Bewegung eines Maschinenteils gegenüber einem anderen Maschinenteil erfaßt. Das Sensorelement kann aber auch durch ein beliebiges anderes Bauteil sein, das in einer bestimmten einzujustierenden Lage an einer Anbaufläche oder einem Anbauteil befestigt werden soll. Wesentlich für die nachfolgende Beschreibung ist lediglich, daß das Element 1 an dem Teil 2, z. B. dort an einer Anbaufläche 3, befestigt wird, wobei eine hochgenau einjustierte Lage angestrebt wird. Die Justierung kann dabei auf das Teil 2 oder auf ein drittes Teil bezogen sein.

Die Befestigung des Sensorelementes 1 am Teil 2 erfolgt durch Verbinden einer Montagefläche M des Sensorelementes 1 mit der Anbaufläche 3 mittels einer Klebung. Dazu ist an der dem Teil 2 bzw. der Anbaufläche 3 zugeordneten Montagefläche M des Sensorelementes 1 eine Klebeschicht 4 vorgesehen, mit der das Sensorelement 1 auf die Anbaufläche 3 angeklebt wird. Natürlich kann man die Klebeschicht 4 auch am Teil 2 vorsehen. Da die Montage des Sensorelementes 1 üblicherweise erst nach der Bereitstellung des Teils 2 und damit vor Ort erfolgt, ist die Klebeschicht 4 üblicherweise mit einem Schutzpapier 5 abgedeckt, um eine unerwünschte Aktivierung der Klebeschicht 4 vor der Montage und insbesondere vor der Endjustierung des Sensorelementes 1 zu verhindern.

Zur Montage wird in einem Vorbereitungsschritt das Schutzpapier 5 von der Klebeschicht 4 abgezogen. Dann folgt ein Vormontageschritt, in dem das Sensorelement 1 mit der Montagefläche M auf die Anbaufläche 3 gesetzt wird. In einem Justierschritt wird dann die gewünschte Lage für das Sensorelement 1 hochpräzise einjustiert und schließlich in einem Endmontageschritt die Klebeschicht 4 aktiviert, um das Sensorelement 1 an der Anbaufläche 3 anzukleben. Üblicherweise verwendet man druckaktivierbare Klebstoffe.

Da bei druckaktivierbaren Klebstoffen ein Kontakt der Klebeschicht 4 mit der Anbaufläche das Verkleben einleitet, ist zum Einjustieren der Endlage im Justierschritt ein in Fig. 2 dargestelltes System mit Abstandshaltern 6 vorgesehen, die das Sensorelement 1 gegen das Teil 2 so abstützen, daß zwischen der Klebeschicht 4 und der Anbaufläche 3 ein Spalt der Dicke d bestehen bleibt. Erst wenn im Montageverfahren das Sensorelement 1 wunschgemäß ausgerichtet ist (z. B. gegenüber dem Teil 2), erfolgt die Klebung durch Entnahme und/oder Kompression der Abstandshalter. Da eine Veränderung der Lage des Sensorelementes 1 nach der Justierung automatisch eine Dejustierung nach sich zöge, sollen Lageänderungen nach dem Justieren und vor der Verklebung des Sensorelementes 1 mit dem Teil 2 möglichst vermieden werden. Je nach Anwendung sind Lageänderungen von weniger als 10 µm ideal. Bei Linear- oder Winkelmeßsystemen liegt d deshalb vorzugsweise zwischen 5/10 und 1/100 mm.

Die in Fig. 2 dargestellten Abstandshalter 6 positionieren die Montagefläche M mit der Klebeschicht 4 mit einem definierten, möglichst geringen Spalt über der Anbaufläche 3, so daß im Justierschritt die Ausrichtung des Sensorelementes 1, beispielsweise in Richtung des in Fig. 2 schematisch dargestellten Doppelpfeiles, einfach möglich ist. Da in dieser Justierstellung das Sensorelement 1 bis auf die Dicke d des Spaltes bereits den korrekten Abstand zum Teil 2 aufweist, kann vorzugsweise zur Justierung eine Abtasteinheit verwendet werden, die für das Sensorelement ohnehin vorgesehen ist. Natürlich sind aber auch geeignete zusätzliche, optische, mechanische, elektrische oder andersartig wirkende Justierhilfsmittel einsetzbar.

Z. B. mit Hilfe der Abtasteinheit wird im Justierschritt überprüft, ob das Sensorelement 1 in der korrekten, endjustierten Lage ist. Ist diese Lage eingestellt, wird im Endmontageschritt das Sensorelement 1, wie in Fig. 3 schematisch dargestellt, durch Andrücken an die Anbaufläche 3 geklebt. Bei diesem Andrücken, das Richtung des in Fig. 3 eingezeichneten Pfeils erfolgt, werden die Abstandshalter 6 deformiert, und der Spalt wird geschlossen.

Die in den Fig. 1 bis 3 dargestellten und im Justierschritt wirkenden Abstandshalter 6 können beispielsweise in Form von verformbaren Elementen, z. B. durch Gummischnüre o.ä., realisiert werden. In der in den Fig. 2 und 3 dargestellten Bauweise ist es dabei möglich, die Abstandshalter nach der Verklebung, d.h. im Zustand der Fig. 3, seitlich herauszuziehen, so daß eine etwaige elastische Rückstellkraft die Klebestelle nicht unter Spannung setzt. Bei einer geeignet stabilen Verklebung können die Abstandshalter 6 aber auch an Ort und Stelle verbleiben. Die Abstandshalter 6 realisieren eine stabile Justierlage des Sensorelementes 1. Sie sind deshalb zur Anbaufläche 3 passend ausgestaltet.

Fig. 4 zeigt eine alternative Ausgestaltung ähnlich der der Fig. 1 bis 3. Hier ist am Sensorelement 1 eine Nut 7 vorgesehen, in der die hier wiederum als Gummischnur realisierten Abstandshalter 6 eingelegt sind und gehalten werden. Durch die Nut 7 kann das Sensorelement 1 bereits mit Abstandshaltern 6 ausgeliefert werden, da diese in der Nut 7 gehalten sind, vorzugsweise unverlierbar. Natürlich kann auch hier ein Entnehmen der Abstandshalter nach der Endmontage vorgesehen werden, z. B. durch Herausziehen der Abstandshalter 6 aus der Nut 7. Die Nut 7 hält nicht nur die Abstandshalter 6, sondern wirkt auch als Verdrängungsraum, in den beim Deformieren der Abstandshalter 6 Material ausweichen kann. Dies läßt gegenüber der Dicke der Klebeschicht 4 vergleichsweise großvolumige Abstandshalter zu. Natürlich ist die Nut 7 nur ein Beispiel für die Verdrängungsraumgestaltung.

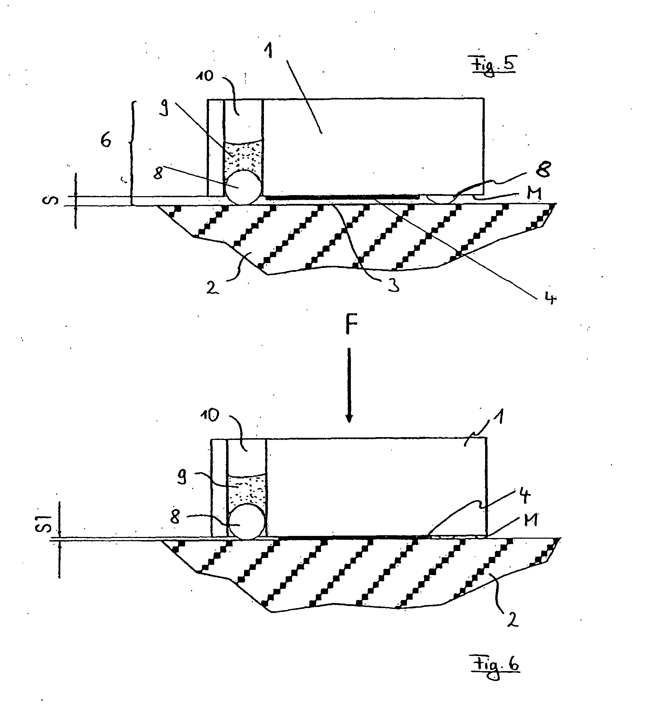

Eine weitere alternative Ausführungsform, die in den Fig. 5 und 6 dargestellt ist, verdeutlicht, daß die Abstandshalter auch mehrteilig ausgeführt sein können. Die in der Darstellung der Fig.2 zwischen Anbaufläche 3 und Unterseite des Sensorelementes 1 eingelegten deformierbaren Abstandshalter sind in der Bauweise, wie sie die Schnittdarstellung der Fig. 5 zeigt, durch einen als Kugel 8 realisierten, weitgehend starren Körper verwirklicht, der von einem verformbaren Klebstoff 9 in einer Bohrung 10 gehalten wird. Die Abstandshalter sind also mehrteilig ausgeführt mit einem starren (Kugel 8) und einem verformbaren Abschnitt (Klebstoff 9). Die Klammer 6 verdeutlicht dieses allgemeine Bauprinzip.

Die Abstandshalter 6 realisieren wiederum einen Spalt, da jede Kugel 8 um das Maß S an der Unterseite des Sensorelementes 1 vorsteht. Bedingt durch die Dicke der Klebeschicht 4 stellt sich somit ein Spalt zwischen Klebeschicht 4 und Anbaufläche 3 ein. Durch Aufbringen einer Kraft F in Richtung des in Fig. 6 gezeigten Pfeils wird die Kugel 8 unter Deformation des Klebstoffes 9 in die Bohrung 10 hineingedrückt und die Klebeschicht 4 verklebt das Sensorelement 1 an der Anbaufläche 3. Die Kugel 8 wird dabei bis auf einen Restspalt S1 in die Bohrung 10 gedrückt, der der Dicke der Klebeschicht 4 entspricht.

In der Lage der Fig. 5, d. h. mit noch nicht verformten Abstandshaltern 6 kann das Sensorelement 1 in die gewünschte Stellung am Teil 2 einjustiert werden; insofern gilt das zu den Fig. 1 bis 3 gesagte für diese Ausführungsform ebenso.

Die Bauweise der Fig. 5 und 6 verdeutlicht, daß die Abstandshalter 6 hier zwei grundsätzliche funktionelle Merkmale haben. Zum einen sorgen sie für einen vorbestimmten Spalt zwischen Montagefläche M des Sensorelementes 1 und Anbaufläche 3, an der das Sensorelement 1 befestigt werden soll. Dieser Spalt ist so bemessen, daß eine Verklebung des Sensorelementes 1 noch nicht stattfindet und eine Justierung möglich ist. Weiter sind die Abstandshalter 6 derart veränderbar, daß z. B. durch Andrücken des Sensorelementes 1 auf die Anbaufläche 3 hin der Spalt geschlossen werden kann. Dies erlaubt es die Verklebung zu aktivieren, wobei es für die Wirkung und Verwendung der Abstandshalter unbeachtlich ist, ob die Verklebung mittels einer am Sensorelement 1 oder an der Anbaufläche 3 vorgesehener Klebeschicht erfolgt. Die Veränderung der Abstandshalter 6 kann durch Verformung oder auch Entnahme bewirkt werden.

Auch kann das Prinzip der Abstandshalter natürlich reversiert werden, indem die Abstandshalter am Teil 2 vorgesehen werden.

Insbesondere kann die Verformung der Abstandshalter 6 elastisch oder inelastisch erfolgen. Man kann den Abstandshalter mehrteilig aufbauen und z. B. ein Abschnitt als spezielles Verformelement vorsehen, das in der Bauweise der Fig. 5 und 6 durch den Klebstoff 9 realisiert ist. Die Verwendung eines inelastischen Körpers, der an dem Verformelement abgestützt ist, ermöglicht es, die Verformwege und vor allem die Verformkräfte, die beim Andrücken des Sensorelementes 1 überbrückt werden müssen, exakt einzustellen. Möchte man beispielsweise die Bauweise der Fig. 5 hinsichtlich einer elastischen Verformung der Abstandshalter 6 abwandeln, kann man den Klebstoff 9 z. B. durch ein in der Bohrung 10 abgestütztes Federelement ersetzen.

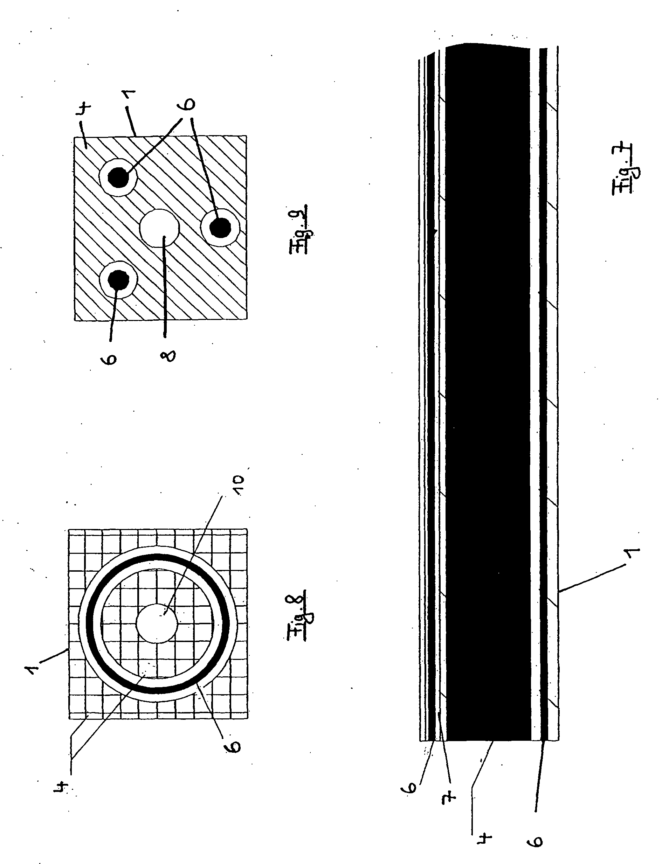

Fig. 7 zeigt eine Ansicht des Sensorelementes 1 der Fig. 1 bis 4 von der Seite mit der Klebeschicht 4 aus gesehen. Wie zu sehen ist, liegt die hier den Abstandshalter 6 realisierende Gummischnur in der Nut 7 außerhalb des Bereiches, an dem die Klebeschicht 4 aufgebracht ist. Das Sensorelement 1 ist in Fig. 7 beispielshalber als Maßstab eines Längenmeßsystems gezeigt. Da solche Meßsysteme üblicherweise an Werkzeugmaschinen eingesetzt werden, kommt hier eine zweite Wirkung der Abstandshalter 6 vorteilhaft zum Tragen. Die Abstandshalter 6 schützen die Klebstoffschicht an mindestens zwei Längskanten gegen Eintritt von Verunreinigungen oder die Verklebung beeinträchtigende Substanzen, z. B. Öle oder Lösungsmittel. Dieser Schutz ist bei nicht-punktförmigen grundsätzlichen Abstandshaltern 6 gegeben, wenn diese die Klebeschicht 4 zumindest teilweise nach außen begrenzen. Der Schutz ist um so besser, je vollständiger der Abstandshalter 6 den Bereich, an dem das Sensorelement 1 mit der Anbaufläche 3 verklebt ist, umgibt.

Fig. 8 zeigt eine Ausführungsform eines Sensorelementes 1, bei dem der Abstandshalter 6 ringförmig ausgebildet ist und einen inneren Bereich der Klebeschicht 4 vollständig umgibt. Zur Sicherung der Verklebung ist zusätzlich eine Bohrung 10 vorgesehen, durch die ein Sicherungselement, beispielsweise eine Schraube oder ein Niet gesetzt werden kann. Die Bohrung 10 ist im Ausführungsbeispiel der Fig. 8 im Zentrum des Sensorelementes 1 ausgeführt, da dort eine Verschraubung vorgesehen ist.

Eine alternative Ausgestaltung des Sensorelementes 1 der Fig. 8 zeigt Fig. 9. Hier ist der Abstandshalter 6 in Form einer Dreipunktauflage ausgebildet, die eine hochpräzise kipp- und spielfreie Einstellung des Spaltes S zwischen Anbaufläche 3 und Sensorelement 1 bewirkt. Für eine solche punktförmige Auflage, die von den Abstandshaltern 6 an drei Punkten bewirkt ist, bieten sich insbesondere Abstandshalter an, wie sie in Fig. 5 gezeigt wurden, da die dort dargestellten Kugeln 8 jeweils punktförmig aufliegen.

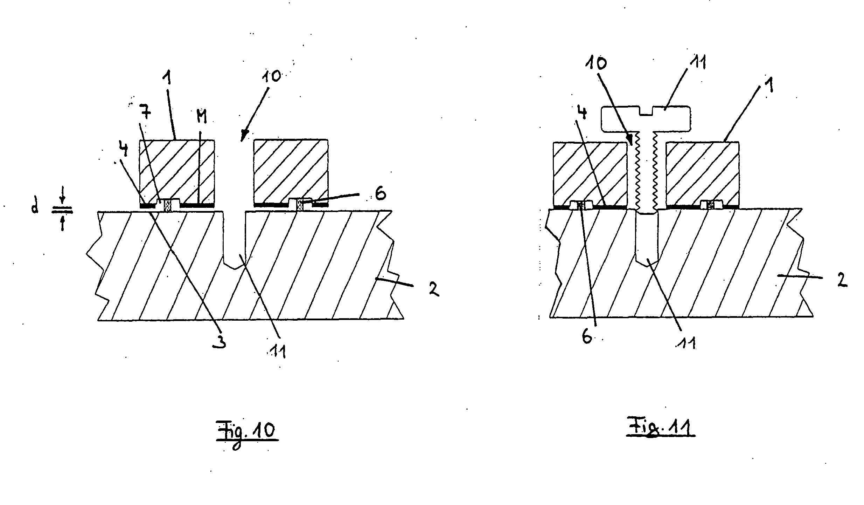

Fig. 10 zeigt das Sensorelement 1 der Fig. 8, bei der der Abstandshalter 6, anders als in der Bauweise der Fig. 1 bis 4, hier nicht elastisch deformierbar, sondern sich im Endmontageschritt inelastisch also dauerhaft verformend ist. An der Unterseite des Sensorelementes 1, an der auch die Klebeschicht 4 aufgebracht ist, ist eine Ringnut 7 ausgebildet, in der ein hier ringförmiger inelastisch verformbarer Abstandshalter 6 befestigt ist. Als Material für den Abstandshalter 6 kommt beispielsweise Styropor oder Schaumgummi in Frage. Die Klebeschicht 4 ist in- und außerhalb des Ringes der Ringnut 7vorgesehen.

Auch im Beispiel der Fig. 11 ist die optionale Bohrung 10 vorgesehen, die zur Sicherung des Sensorelementes 1 auf dem Maschinenteil 2 dient. Durch die Bohrung 10 wird ein Sicherungselement gesetzt, das in der Bauweise der Fig. 11 als Schraubverbindung 11 zwischen einem in einem Sackloch befindlichen Gewinde und einer Schraube ausgeführt ist.

Zur Vormontage wird das Sensorelement 1 auf die Anbaufläche 3, z. B. einen Wellenflansch, gesetzt. Die Abstandshalter 6 bewirken einen Spalt der Dicke d. Fig. 10 zeigt das Sensorelementes 1 nach dem Vormontageschritt in der Stellung zur Justierung, in der das Sensorelement 1 applikationsgerecht ausgerichtet wird. Z. B. wird die Bohrung 10 zur Drehachse eines sich drehenden Maschinenteils zentriert. Die Justierung ist einfach möglich, da der Abstandshalter 6 den bestimmten Spalt zwischen Klebeschicht 4 und Anbaufläche 3 sicherstellt. Ist die gewünschte Justierung erreicht, was mit Rückgriff auf eine das Sensorelement 1 abtastende Abtasteinheit überprüft werden kann, wird das Sensorelement 1 in der Endmontage auf das Maschinenteil hin gedrückt. Dabei verformen sich die Abstandshalter 6, und der Spalt wird geschlossen. Die Klebeschicht 4 verklebt das Sensorelement 1 an der Anbaufläche 3.

Zur zusätzlichen Befestigung oder Sicherung wird, wie in Fig. 11 gezeigt, dann die Schraubverbindung 11 mit der in das Gewindeloch eingreifenden Schraube angezogen. Der Abstandshalter 6, der beim Andrücken des Sensorelementes 1 verformt wurde, verbleibt in der Ringnut 7. Die Schraubverbindung kann aber auch zur Verwirklichung der Justierstellung als Vorbefestigungsmittel dienen, das im Justierabschnitt eine Lageeinstellung ermöglicht und dann die Endmontage mit Verformung des Abstandshalters 6 und Verklebung bewirkt (z. B. durch Anziehen der Schraubverbindung).

Wesentlich für die Beibehaltung der zuvor im Justierschritt einjustierten Lage beim Andrücken während der Endmontage ist eine hinreichend definierte Verformungskennlinie der Abstandshalter 6. Es kommen somit prinzipiell drei verschiedene Arten von Abstandshaltern in Frage.

Die Abstandshalter können elastische Werkstoffe aufweisen, so daß zumindest ein Abschnitt jedes Abstandshalters beim Andrücken des Klebers elastisch verformt wird. Insbesondere können hochfeste federnde Werkstoffe eingesetzt werden, wenn die Geometrie der Abstandshalter 6 so gestaltet ist, daß ein Andrücken des Sensorelementes gegen die federnde Wirkung des Abstandshalters 6 mit bestimmter Kraft erreichbar ist.

Bei den Abstandshaltern kann auch eine inelastische Verformung eingesetzt werden. Dies hat den Vorteil, daß keine die Verklebung belastende Kraft aufgebaut ist, wenn die Abstandshalter 6 deformiert wurden.

Darüber hinaus kann man die Abstandshalter natürlich auch entnehmen, damit die Klebung mit der Klebeschicht 4 wirksam wird. Sie können dann sogar unverformbar sein, und Rückstellkräfte durch die Abstandshalter spielen keine Rolle mehr.

Das vorstehend erläuterte Sensorelement ist ein Beispiel für ein Bauteil, das in einer vorbestimmten Stellung an einem anderen Bauteil befestigt werden muß. Dabei wird in den hier verfolgten Ansätzen der Weg beschritten, zuerst eine Vormontage durchzuführen, in der das Bauteil noch nicht endgültig befestigt. Zuerst wird soweit wie möglich die einzunehmende Endlage justiert. Dies kann mit und ohne Mitwirkung des Bauteils 1 gescheihen. In einer anschließenden Endmontage wird das Bauteil dann endgültig in die Ziellage gebracht und dabei fixiert; in den geschilderten Ausführungsbeispielen erfolgt dies mit einer Klebung.

Die nachfolgenden Figuren befassen sich damit, die Vormontage durch Vorbefestigungsmittel möglichst einfach zu bewerkstelligen. Auf die konkrete Ausgestaltung des Bauteils kommt es dabei nicht an.

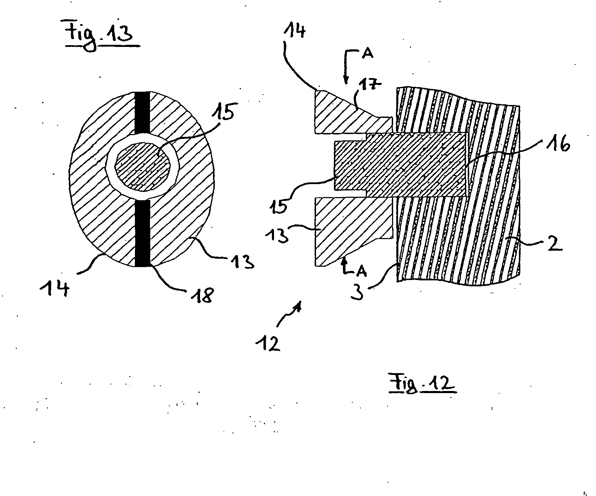

Fig. 12 zeigt ein Vorbefestigungsmittel 12, das zwischen Maschinenteil und Sensorelement wirkt. Dazu verfügt das Vorbefestigungsmittel 12 über zusammenwirkende Elemente sowohl am Maschinenteil als auch am Sensorelement. Am Maschinenteil 2, an welchem später das Sensorelement 1 befestigt werden soll, weist das Vorbefestigungsmittel 12 einen Kopf 13 auf, der an seinem Umfang als Exzenter 14 ausgebildet ist. Der Kopf 13 sitzt auf einem Zapfen 15, der in eine in das Maschinenteil 2 eingebrachte Bohrung 16 eingepreßt ist. Diese Preßpassung bewirkt, daß der Zapfen 15 drehfest an dem Maschinenteil 2 sitzt. Der Kopf 13 ist dagegen auf dem Zapfen 15 drehbar.

Diese funktionelle Wirkung des Vorbefestigungsmittels 12 kann natürlich auch dadurch erreicht werden, daß Kopf 13 und Zapfen 15 drehfest verbunden sind, und der Zapfen 15 in der Bohrung 16 drehbar gehalten ist, beispielsweise unter Zwischenschaltung eines in die Bohrung 16 vor dem Einsetzen des Zapfens 15 eingebrachten viskosen Mediums.

Der Kopf 13 hat neben einer als Exzenter 14 ausgebildeten Umrißlinie eine sich zum Maschinenteil 2 hin verjüngende Kegelstumpffläche 17. Es liegt somit ein kegelstumpfartiger Exzenter mit einer zylindrischen Umrißfläche vor. Der Kopf 13 hat also einen Kegelstumpfanteil und einen Zylinderanteil (letzterer im folgenden Exzenter 14).

Die Exzentrizität ist in der Schnittdarstellung der Fig. 13, die entlang der Linie A-A der Fig. 12 gewonnen wurde, deutlich zu sehen. Natürlich genügt jeder beliebige Exzenter, z. B. eine Kreisscheibe mit dezentral plazierter Achse. Fig. 13 zeigt weiter, daß der Exzenter 14 über einen Schlitz 18 verfügt, in den ein Schraubendreher eingesetzt werden kann, um den Exzenter um den Zapfen 15 zu schwenken. Diese Schwenkung dient, wie später noch erläutert werden wird, zur Einstellung der justierten Lage.

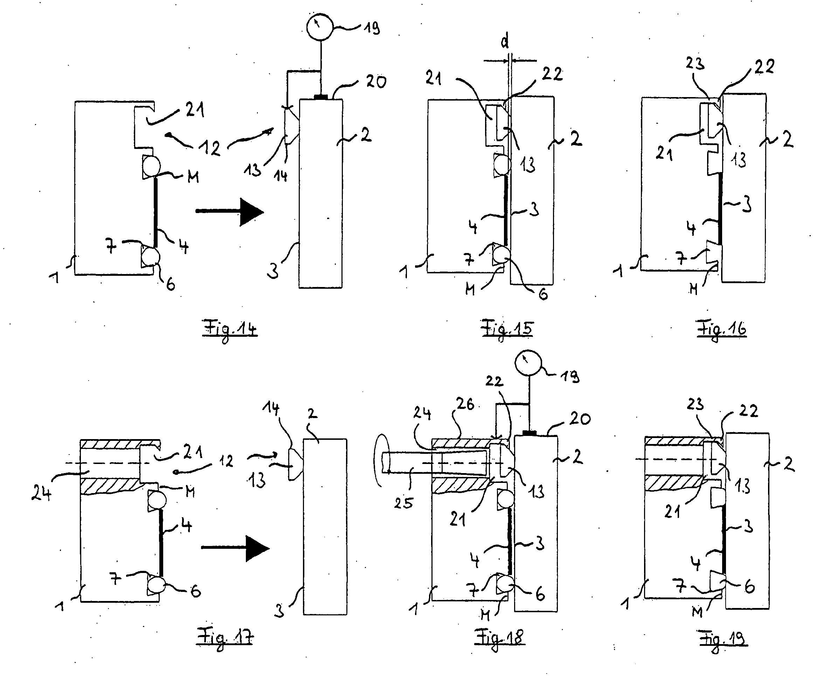

Die Fig. 14 bis 19 zeigen, wie das Sensorelement 1 unter Verwendung des Vorbefestigungsmittels 12 am Maschinenteil 2 befestigt wird. Die Darstellung ist dabei hinsichtlich des Maschinenteils 2 und des Sensorelementes 1 lediglich zur Veranschaulichung; von Bedeutung ist im wesentlichen die Wirkung des Vorbefestigungsmittels 12, wie sie nachfolgend exemplarisch erläutert wird.

Das Vorbefestigungsmittel weist zusätzlich zu den geschilderten Köpfen 13 eine oder mehrere passende Ausnehmungen 21 am Sensorelement 1 auf, mit denen das Sensorelement 1 an den Köpfen 13 aufgehängt werden kann. Die Vorbefestigungsmittel 12 sind also im wesentlichen durch zwei Komponenten gebildet, zum einen die Köpfe 13, die am Maschinenteil 2 befestigt werden, und zum anderen durch eine oder mehrere Ausnehmungen 21, mit denen das Sensorelement 1 an den Köpfen aufhängbar ist. Natürlich kann die in den Fig. 14 bis 19 gezeigte Bauweise auch hinsichtlich der Anordnung von Köpfen 13 und Ausnehmungen oder Ausnehmung 21 vertauscht werden, so daß ein oder mehrere Köpfe 13 am Sensorelement 1 vorgesehen werden und die entsprechenden dazugehörigen Ausnehmungen bzw. eine durchlaufende Ausnehmung am Maschinenteil 2.

In den Darstellungen der Fig. 14 bis 19 ist das Sensorelement beispielhalber als Linear-Geberelement eines Längenmeßsystems gezeigt. Die Fig. 14 bis 16 zeigen dabei eine erste mögliche Bauvariante des Vorbefestigungsmittels 12, die Fig. 17 bis 19 eine zweite Variante.

Zur Vorbereitung der Befestigung wurde an der Anbaufläche 3 des Maschinenteils 2 zuerst eine Reihe von Köpfen 13 angebracht, von denen die Schnittdarstellungen der Fig. 14 bis 19 jeweils einen zeigen. Das Sensorelement 1 kann an den Köpfen 13 aufgehängt werden. Dadurch ist ein separates Hilfselement zur Versteifung und Ausrichtung des Sensorelementes 1 entbehrlich.

Im Justierschritt werden in der Ausführungsform der Fig. 14 bis 16 zuerst die Exzenter 14 der Köpfe 13 mit Hilfe geeigneter Meßmittel, die in Fig. 14 durch eine Meßuhr 19 veranschaulicht sind, so einjustiert, daß alle Exzenter 14 bezogen auf das Maschinenteil 2 eine vorbestimmte Lage haben.

Die Meßuhr 19 erfaßt die Lage jedes Exzenters 14, d. h. des zylindrischen Abschnittes der Köpfe 13, bezogen auf eine Bezugsfläche 20, die z. B. am Maschinenteil 2 ausgebildet ist. Zur Einjustierung der Exzenter 14 wird jeder Kopf 13 so gedreht, daß die Oberkante des Exzenters 14 ein vorbestimmtes Maß zur Bezugsfläche 20 innehat. Die in einer Reihe am Maschinenteil 2 angebrachten Köpfe 13 der haben folglich dann eine fluchtende Oberkante ihrer Exzenter 14.

Nach diesem Justierschritt folgt die Vormontage, bei der, wie Fig. 14 veranschaulicht, das Geberelement 1 mit seiner Ausnehmung 21 an die Köpfe 13 gehängt wird. Den dadurch erreichten Zustand zeigt Fig. 15. Eine Hinterschneidung 22 an der Ausnehmung 21 bewirkt zusammen mit den Kegelstumpfflächen 17 der Köpfe 13, daß das eingehängte Sensorelement 1 nicht mehr von den Köpfen 13 abrutschen kann, sondern durch die konkrete Ausgestaltung auf die Anbaufläche 3 hingezogen wird. Durch die bereits erfolgte Einstellung der Exzenter 14 ist nach Abschluß der Vormontage das Sensorelement 1 dann in der gewünschten justierten Lage. Die geringe Größe des Spaltes d erlaubt, wie zuvor bereits erläutert, zur Abtastung des Sensorelementes ohnehin vorhandene Meßmittel zur Überprüfung der einjustierten Lage heranzuziehen.

Die Abstandshalter 6, die hier als Längselemente verwirklicht sind, bewirken vorteilhafterweise den vorbestimmten Spalt d zwischen der Klebeschicht 4 und der Anbaufläche 3. Nun wird im Endmontageschritt das Sensorelement 1 auf das Maschinenteil 2 hingedrückt, wodurch sich die Hinterschneidung 22 von der Kegelstumpffläche jedes Kopfes 13 löst. Die bereits (vgl. Fig. 14) vorgenommene präzise Einjustierung der Oberkante der Exzenter 14 und die hochpräzise Ausbildung der Ausnehmung 21 stellen sicher, daß beim Andrücken des Sensorelementes 1 an die Anbaufläche 3, die vorbestimmte, justierte Lage erhalten bleibt.

Die Ausnehmung 21 ist dabei so gestaltet, daß sie eine Anlagefläche 23 aufweist, auf der die Exzenter 14 gleiten, wenn das Sensorelement 1 auf die Anbaufläche 3 gedrückt wird. Die Anlagefläche 23 der Ausnehmung 21 in Zusammenhang mit den justierten Exzentern 14 bewirkt dabei, daß der Spalt geschlossen wird; bis auf diese Abstandsänderung bezüglich des Maschinenteils 2 bleibt die Lage des Sensorelementes 1 unverändert im justierten Zustand. Somit ist im endmontierten Zustand der Fig. 16 das Sensorelement 1 in der justierten Stellung an die Anbaufläche 3 des Maschinenteils 2 geklebt; die Abstandshalter 6 wurden aus den Nuten 7 entnommen.

Anders als bei der Ausführung nach Fig. 1 - 5 wird in der Bauweise der Fig. 14 bis 16 der Justierschritt vor der Vormontage ausgeführt. Die Abstandshalter 6 wirken an der Justierung nicht mit, sondern ermöglichen die hochpräzise Endmontage in der bereits einjustierten Stellung.

Anders ist dies in der Bauweise, die die Fig. 17 bis 19 zeigen. Hier ist das Sensorelement 1 mit einer Bohrung 24 versehen, die es erlaubt, mittels eines Schraubendrehers 25 die Köpfe 13 zu verstellen, wenn das Sensorelement 1 bereits an die Köpfe 13 gehängt ist. Die Darstellung der Fig. 17 bis 19 entspricht im wesentlichen der in Fig. 14 bis 16 gezeigten Ansicht, so daß auf dort bereits beschriebene Elemente verwiesen wird.

In Fig. 17 wird das Sensorelement 1 mittels der Vorbefestigungsmittel 12, die wiederum die Ausnehmung 21 und die Köpfe 13 aufweisen, an das Maschinenteil 2 gehängt wird. Im Unterschied zur Fig. 14 sind die Köpfe 13 allerdings noch nicht justiert.

Der Justierschritt wird nach dieser Vormontage ausgeführt; den entsprechenden Zustand zeigt Fig. 18. Wiederum erfolgt mit Hilfe eines geeigneten Meßmoduls, das z. B. die Meßuhr 19 aufweisen kann, eine Erfassung der Lage zur Bezugsfläche 20. Nun wird allerdings nicht die Lage des Exzenters 14 selbst, sondern die einer entsprechenden Gegenfläche 26 des Sensorelements 1 gemessen. Durch die Bohrung 24 hindurch wird mit dem Schraubendreher 25 jeder Exzenter 14 so gedreht, daß die gewünschte Lage des Sensorelementes 1 gegenüber der Bezugsfläche 20 erreicht ist. Günstigerweise wird dabei die Durchbiegung des Sensorelementes entlang seiner (senkrecht zur Zeichenebene verlaufenden) Längsachse erfaßt und minimiert.

Anschließend wird, wie bereits erläutert, das Sensorelement 1 durch Andrücken auf das Maschinenteil 2 geklebt oder geschraubt. In der Abwandlung zu der in den Fig. 14 bis 16 gezeigten Bauweise verbleiben hier die elastisch deformierten Abstandshalter 6 in den Nuten 7.

## Patentansprüche

1. Montagesystem zum Einjustieren und Befestigen eines ersten Bauteils an einem zweiten Bauteil, wobei
- das System das erste Bauteil (1), das zweite Bauteil (2) sowie mindestens zwei als Exzenter ausgebildete Köpfe (13) umfaßt,
- das zweite Bauteil (2) eine Anbaufläche (3) aufweist, an der die Köpfe (13) drehbar befestigbar sind, und
- das erste Bauteil (1) mindestens eine Ausnehmung (21) aufweist,
- wobei die Köpfe (13) im an der Anbaufläche (3) befestigten Zustand in die mindestens eine Ausnehmung (21) einhängbar sind und dadurch das eine der beiden Bauteile mit in die Ausnehmung (21) eingreifenden Köpfen (13) am anderen der beiden Bauteile einhängbar ist, wobei die Exzenterdrehlage der Köpfe (13) die Lage des eingehängten Bauteils an der Anbaufläche (3) einstellt,
**dadurch gekennzeichnet, daß**
das erste oder das zweite Bauteil eine Klebeschicht (4) zum Ankleben des ersten Bauteils (1) an der Anbaufläche (3) und entnehm- oder verformbare Abstandshalter (6) aufweist, welche bei eingehängtem Bauteil vor der Entnahme oder Verformung der Abstandshalter (6) das erste Bauteil (1) so gegen das zweite Bauteil (2) abstützen, daß ein Spalt zwischen Klebeschicht (4) und Anbaufläche (3) besteht, wobei durch Entnahme oder Verformung der Abstandshalter (6) das erste Bauteil (1) an der Anbaufläche (3) anklebbar ist.

2. System nach Anspruch 1, wobei jeder Kopf (13) einen sich zur Anbaufläche (3) hin verjüngenden Kegelstumpfabschnitt (17) aufweist.

3. System nach Anspruch 2, wobei dem Kegelstumpfabschnitt (17) in Richtung auf die Anbaufläche (3) ein zylindrischer Abschnitt vorgelagert ist.

4. System nach einem der obigen Ansprüche, mit mindestens zwei an der Anbaufläche (3) befestigbaren Zapfen (15), auf denen jeweils einer der Köpfe (13) sitzt.

5. System nach einem der obigen Ansprüche, wobei jeder Kopf (13) eine Eingriffsöffnung (18) zum Einsetzen eines Drehwerkzeuges (25) aufweist.

6. System nach einem der obigen Ansprüche, das Endbefestigungsmittel (4) aufweist, die das in der justierten Lage aufgehängte Bauteil (1) an der Anbaufläche (3) befestigen.

7. System nach Anspruch 2, wobei die Ausnehmung (21) eine Hinterschneidung (22) aufweist, die bei aufgehängtem Bauteil (1) am Kegelstumpfabschnitt (17) anliegt.

8. System nach einem der obigen Ansprüche, wobei die Ausnehmung (21) als Nut und damit zum Eingriff mehrerer Köpfe (13) ausgebildet ist.

9. System nach einem der obigen Ansprüche, wobei im ersten Bauteil (1) mindestens ein Durchbruch (24) vorgesehen ist, durch den hindurch die Köpfe (13) drehbar antreibbar sind.

10. Verfahren zur Montage eines ersten Bauteils (1) an einer Anbaufläche (3) eines zweiten Bauteils (2), bei dem ein Montagesystem nach einem der Ansprüche 1-9 verwendet wird und
- vorbereitend an der Anbaufläche (3) die mindestens zwei Köpfe (13) drehbar befestigt werden, die jeweils als Exzenter (14) ausgebildet sind,
- zur Justierung die Köpfe (13) durch Drehen einjustiert werden, so daß die Ober- oder Unterkanten der Exzenter (14) eine bestimmte Lage haben,
- zur Vormontage das erste Bauteil (1) mittels der Köpfe (13) an der Anbaufläche (3) aufgehängt wird und
- das erste Bauteil (1) auf die Anbaufläche (3) gedrückt wird und dabei die Abstandshalter (6) verformt oder entnommen werden, wodurch das erste Bauteil (1) an der Anbaufläche (3) angeklebt wird.

11. Verfahren nach Anspruch 10, wobei die Justierung nach der Vormontage ausgeführt wird, indem die Köpfe (13) mit angehängtem Bauteil (1) durch Drehen einjustiert werden.

## Claims

1. Mounting system for adjusting and fastening a first component on a second component, wherein
- the system comprises the first component (1), the second component (2) and also at least two heads (13) designed as eccentrics,
- the second component (2) has an attachment surface (3) on which the heads (13) can be rotatably fastened, and
- the first component (1) has at least one cutout (21),
- wherein the heads (13), when in the state in which they are fastened on the attachment surface (3), can be suspended in the at least one cutout (21) and wherein one of the two components can be suspended on the other of the two components by means of heads (13) engaging in the cutout (21), wherein the eccentric rotary position of the heads (13) sets the position of the suspended component on the attachment surface (3),
**characterized in that** the first or the second component has an adhesive layer (4) for adhesively bonding the first component (1) on the attachment surface (3) and has removable or deformable spacers (6) which, with the component suspended and before the removal or deforming of the spacers (6), support the first component (1) against the second component (2) such that there is a gap between adhesive layer (4) and attachment surface (3), wherein the first component (1) can be adhesively bonded to the attachment surface (3) by removing or deforming the spacers (6).

2. System according to Claim 1, wherein each head (13) has a frustoconical portion (17) tapering towards the attachment surface (3).

3. System according to Claim 2, wherein a cylindrical portion is located upstream of the frustoconical portion (17) in the direction of the attachment surface (3).

4. System according to one of the above claims, comprising at least two pins (15) which can be fastened on the attachment surface (3) and on each of which one of the heads (13) is seated.

5. System according to one of the above claims, wherein each head (13) has an engagement opening (18) for inserting a rotary tool (25).

6. System according to one of the above claims, which has end-fastening means (4) which fasten the component (1) suspended in the adjusted position on the attachment surface (3).

7. System according to Claim 2, wherein the cutout (21) has an undercut (22) which, with component (1) suspended, bears against the frustoconical portion (17).

8. System according to one of the above claims, wherein the cutout (21) is designed as a groove and hence for the engagement of a plurality of heads (13).

9. System according to one of the above claims, wherein at least one opening (24) through which the heads (13) can be rotatably driven is provided in the first component (1).

10. Method for mounting a first component (1) on an attachment surface (3) of a second component (2), in which a mounting system according to one of Claims 1-9 is used and
- the at least two heads (13) which are each formed as eccentrics (14) are preliminarily rotatably fastened on the attachment surface (3),
- for adjustment, the heads (13) are adjusted by rotation such that the upper or lower edges of the eccentrics (14) have a defined position,
- for pre-mounting, the first component (1) is suspended on the attachment surface (3) by means of the heads (13) and
- the first component (1) is pressed onto the attachment surface (3) and in so doing the spacers (6) are deformed or removed, with the result that the first component (1) is adhesively bonded to the attachment surface (3) .

11. Method according to Claim 10, wherein the adjustment is carried out after the pre-mounting in that the heads (13) with suspended component (1) are adjusted by means of rotation.

## Revendications

1. Système d'assemblage pour ajuster et fixer un premier composant sur un deuxième composant,
- le système comportant le premier composant (1), le deuxième composant (2) ainsi qu'au moins deux têtes (13) réalisées sous forme d'excentriques,
- le deuxième composant (2) comprenant une surface de montage (3) sur laquelle les têtes (13) peuvent être fixées de manière rotative, et
- le premier composant (1) comprenant au moins un évidement (21),
- les têtes (13) pouvant être accrochées, dans l'état fixé à la surface de montage (3), dans l'au moins un évidement (21) et ainsi l'un des deux composants pouvant être accroché à l'autre des deux composants, les têtes (13) étant engagées dans l'évidement (21), la position angulaire de l'excentrique des têtes (13) réglant la position du composant accroché sur la surface de montage (3),
**caractérisé en ce que**
le premier ou le deuxième composant comprend une couche adhésive (4) pour le collage du premier composant (1) sur la surface de montage (3) et des éléments d'écartement amovibles ou déformables (6) qui, lorsque le composant est accroché, avant le retrait ou la déformation des éléments d'écartement (6), appuient le premier composant (1) contre le deuxième composant (2) de telle sorte qu'un interstice existe entre la couche adhésive (4) et la surface de montage (3), le premier composant (1) pouvant être collé sur la surface de montage (3) en retirant ou déformant les éléments d'écartement (6).

2. Système selon la revendication 1, dans lequel chaque tête (13) comprend une section tronconique (17) se rétrécissant en direction de la surface de montage (3).

3. Système selon la revendication 2, dans lequel une section cylindrique est située avant la section tronconique (17) en direction de la surface de montage (3).

4. Système selon l'une quelconque des revendications précédentes, comprenant au moins deux chevilles (15) fixées à la surface de montage (3), sur lesquelles repose respectivement l'une des têtes (13).

5. Système selon l'une quelconque des revendications précédentes, dans lequel chaque tête (13) comprend une ouverture d'engagement (18) pour l'insertion d'un outil rotatif (25).

6. Système selon l'une quelconque des revendications précédentes, qui comprend des moyens de fixation finale (4) qui fixent à la surface de montage (3) le composant (1) suspendu dans la position ajustée.

7. Système selon la revendication 2, dans lequel l'évidement (21) comprend une contre-dépouille (22) qui s'applique contre la section tronconique (17) lorsque le composant (1) est suspendu.

8. Système selon l'une quelconque des revendications précédentes, dans lequel l'évidement (21) est réalisé sous forme de rainure et donc en vue de l'engagement de plusieurs têtes (13).

9. Système selon l'une quelconque des revendications précédentes, dans lequel au moins un trou débouchant (24) est prévu dans le premier composant (1), à travers lequel trou débouchant les têtes (13) peuvent être entraînées de manière rotative.

10. Procédé d'assemblage d'un premier composant (1) sur une surface de montage (3) d'un deuxième composant (2), dans lequel un système d'assemblage selon l'une quelconque des revendications 1 à 9 est utilisé et
- de manière préliminaire, les au moins deux têtes (13) sont fixées de manière rotative sur la surface de montage (3), lesquelles sont réalisées sous forme d'excentriques (14),
- en vue de l'ajustage, les têtes (13) sont ajustées par rotation, de sorte que les bords supérieur et inférieur des excentriques (14) aient une position déterminée,
- en vue du pré-assemblage, le composant (1) est suspendu sur la surface de montage (3) au moyen des têtes (13) et
- le premier composant (1) est pressé sur la surface de montage (3) et à cet effet les éléments d'écartement (6) sont déformés ou retirés, de sorte que le premier composant (1) soit collé sur la surface de montage (3).

11. Procédé selon la revendication 10, dans lequel l'ajustage est réalisé après le pré-assemblage en ajustant les têtes (13) par rotation, le composant (1) étant suspendu.
